# EUROPEAN PATENT APPLICATION

(11) **EP 1 479 490 A2**
(43) Date of publication of application: **24.11.2004**
(21) Application number: 04425362.3
(22) Date of filing: 19.05.2004
(51) Int. Cl.: B27B 27/08, B27B 27/10, B23D 47/02

(54) **An angular positioning device for machines for machining panels made of wood or similar materials**

(30) Priority: 23.05.2003 IT BO20030324
(71) Applicant: SCM GROUP S.p.A., 47900 Rimini (IT)
(72) Inventor: Pucci, Aureliano, 47900 Rimini (IT); Varotti, Andrea, 61015 Talamello (Pesaro Urbino) (IT)
(74) Representative: Lanzoni, Luciano

(57) **Abstract**

An angular positioning device applicable on machines (1) for machining panels (2) made of wood or similar materials comprises: a worktable (3) consisting of a fixed supporting portion (3a) and a portion (3b) which is mobile, in both directions, along a direction of feed (A); a machining tool (4) attached to the fixed portion (3a) and positioned parallel with the direction of feed (A); a reference and rule fence (5) for the panel, which pivots at (X), on the mobile portion (3b) and whose angle can be adjusted relative to the direction of feed (A) to define angled cuts on the panel (2); the fence (5) has panel (2) reference - stop parts (6) designed to allow the display of an operating reference dimension (Q) on the fence (5) and having a cutting zero point (PZ) belonging to the tool (4) cutting plane (4a); the device comprises means (8) for adjusting the linear position of the fence (5) relative to the cutting plane (4a), said means operating between the fence (5) and the pivot point (X), designed to allow the fence (5) to be adjusted parallel with itself, according to the angular position reached, so as to keep the measurement defined between the reference - stop parts (6) and the zero point (PZ) constant at any angle value (α).

## Description

The present invention relates to an angular positioning device for machines for machining panels made of wood or similar materials.

More precisely, the machines in question are for machining panels made of wood or similar materials, and more specifically a machine for sawing panels, but it may also advantageously be used to machine other materials such as fibre materials, panes of glass or synthetic materials, etc.

The current machines for cutting wooden panels (the standard machines commonly know as circular saws) substantially consist of a support base with an upper portion forming a horizontal table divided into a fixed portion from which the cutting tool projects and a mobile portion, or carriage, mainly extending in a direction in which the panel to be cut slides.

The table - fixed portion has a slit, aligned with the direction of sliding, from which the portion of circular saw with a (nominally) horizontal axis projects.

On the mobile worktable or close to it there may be various accessories for positioning, defining panel final dimensions, and for aiding panel handling.

The accessories are normally mounted on the machine according to the type of machining and the dimensions of the panels to be machined: for example, for very large panels an auxiliary carriage which can be connected to the mobile part of the table is used to support the panel and extends in a cantilever fashion transversally from one side of the table; for medium - small sized panels (the most common) a stop fence is used which pivots, at one end, at the mobile worktable in a position close to the circular saw blade then extends in a cantilever fashion outside the worktable.

The stop fence normally has a graduated rod, slidably positioned above the fence, to display the size of the panel and has a stop surface for the edge of the panel to be cut, defining the final panel size.

The operator positions the panel against the fence, adjusts the panel according to the measurement to be made using the graduated reference rod, then feeds the panel - table assembly towards the blade to make the cut.

The fence has the graduated rod with the zero point at the (outer) face of the blade facing the fence, since the latter will form the visible panel cutting surface. Therefore, thanks to the graduated rod - adjustable stop assembly, the machine operator can position the panel to be cut in the precise position in order to obtain the predetermined measurement displayed. This is the case under standard conditions, that is to say, with the fence at a right angle to the cutting surface.

These circular saw machines are also usually used to make slanting or angled cuts, relative to the position at a right angle to the above-mentioned direction of feed.

To do this, the fence must be angled, one way or the other, relative to the circular saw, by moving it about the fence pivot point and locking it at the angle reached with the aid, on the worktable, of a reference table (auxiliary and positioned below the fence) having a curved configuration (known as a steady rest to experts in the field) for displaying the angle of inclination to be reached.

However, this operation, with the above-mentioned structure, has the disadvantage of incorrect cutting performed which does not correspond to the actual value of the final dimensions of the panel displayed on the reference rod.

This is due to the fact that the fence initial zero value is calibrated, as already indicated, according to its perpendicular position relative to the cutting plane and therefore is subject to deviation - that is to say, measuring errors occur - according to the angle of inclination.

The measurement of the cut, or rather, the position of the stop on the fence, must therefore be calculated by the operator at least according to the angle of panel deviation: through the software related to the machine or approximation data.

An operation of this type is, therefore, not very practical and significantly slows down the operator's work, even relative to the increase in machining with angled cuts on panels due to the ever greater customisation requirements of the furniture formed by the panels.

The aim of the present invention is, therefore, to overcome these disadvantages by providing an angular positioning device for machines for machining panels which is extremely practical, with rapid fence positioning and a high level of precision in automatically sizing the panel to be machined, i.e.: without the need for calculation processing; all with a structure and dimensions compatible with the current machine architectures.

Accordingly, said aim is fulfilled by an angular positioning device applicable on machines for machining panels, comprising: a worktable consisting of a fixed supporting portion and a portion which is mobile, in both directions, along a direction of feed; a machining tool attached to the fixed portion and positioned parallel with the direction of feed; a reference and rule fence for the panel, which pivots on the mobile portion and whose angle can be adjusted relative to the direction of feed to define angled cuts on the panel; the fence has panel reference - stop parts designed to allow the display of an operating reference dimension on the fence and having a cutting zero point belonging to the tool cutting plane; the device comprises means for adjusting the linear position of the fence relative to the cutting plane, said means operating between the fence and the pivot point, designed to allow the fence to be adjusted parallel with itself, according to the angular position reached, so as to keep the measurement defined between the reference - stop parts and the zero point constant at any angle value.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a schematic top plan view of a machine for machining panels equipped with the angular positioning device made in accordance with the present invention, in a first angled configuration;
- Figure 2 is a schematic top plan view of the machine illustrated in Figure 1, in accordance with the present invention, in a second angled configuration;
- Figure 3 is an exploded perspective view with some parts cut away to better illustrate others of the angular positioning device illustrated in the previous figures;
- Figure 4 is an exploded perspective view of part of the device illustrated in Figure 3;
- Figure 5 is a schematic front view with some parts cut away to better illustrate others of a detail of the machine illustrated in Figures 1 and 2, and in particular the pivot zone of a fence and the machining tool.

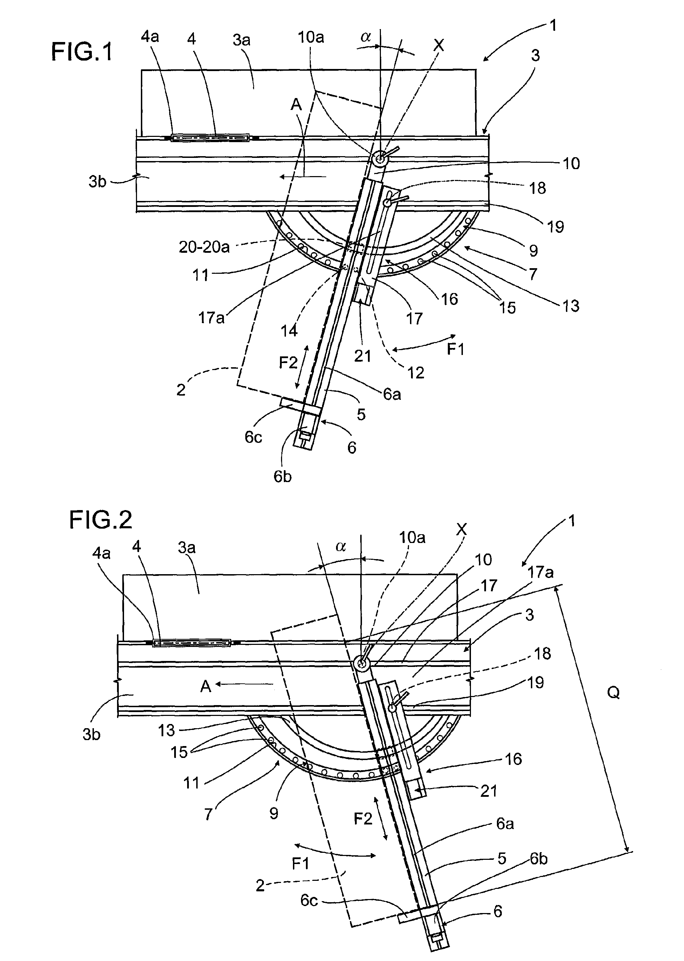

With reference to the accompanying drawings, and in particular with reference to Figures 1 and 2, the angular positioning device disclosed is particularly applicable on machines, labelled 1 as a whole, for machining panels 2 made of wood or similar materials, such as fibre materials, panes of glass or synthetic materials, etc.

These machines 1 for machining panels 2 (shown with a dashed line) basically comprise:
- a worktable 3 consisting of a fixed supporting portion 3a and a portion or carriage 3b which is mobile, in both directions, along a direction of feed A (see arrows F in Figures 1 and 2), allowing the panel 2 to be cut to slide;
- a machining tool 4 (a circular saw in the case illustrated) attached to the fixed portion 3a of the worktable 3, partially projecting from the worktable 3 through a slit 4a, having an axis substantially parallel with the worktable 3 and positioned parallel with the direction of feed A;
- a reference and rule fence 5 for the panel 2, pivoting, at X, on the mobile portion 3b of the worktable 3; in this way the angle of the fence 5 can be adjusted relative to the direction of feed A to allow angled cuts on the panel 2 (see arrows F1 in Figures 1 and 2).

The fence 5 also has panel 2 reference and stop parts 6, designed to allow the display of a reference dimension Q on the fence 5. The parts 6 may comprise, by way of example and without limiting the scope of the invention, a magnetic plate 6a positioned on the fence 5 and connected to a first display 6b for the reference dimension Q and a stop surface 6c connected to the display 6b and able to slide along the fence 5.

The dimension Q is calculated with the fence 5 cutting zero point PZ belonging to the tool 4 cutting plane 4a (see Figure 5).

The numeral 7 denotes means for displaying the angle α reached by the fence 5, positioned on the mobile portion 3b and at the fence 5.

More precisely, these display means 7 may comprise a semicircular plate 7a, attached or attachable (according to operating requirements) to the mobile portion 3b and positioned below the fence 5.

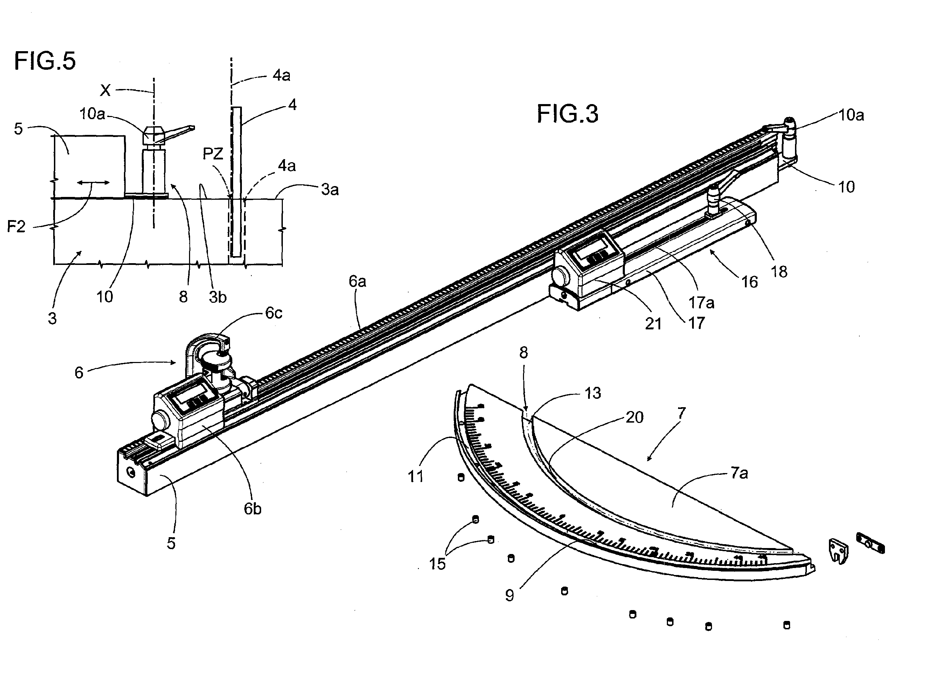

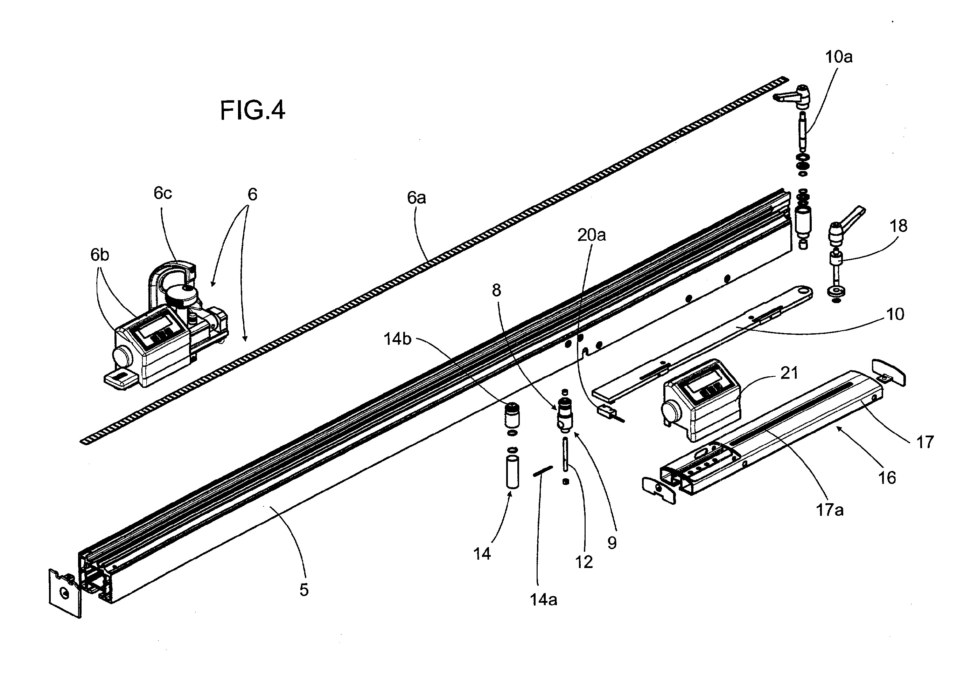

As is also clearly visible in Figures 3 and 4, the numeral 8 denotes means for adjusting the linear position of the fence 5 relative to the tool 4 cutting plane 4a, operating between the fence 5 and its pivot point X on the mobile portion 3b.

These adjusting means 8 allow the fence 5 to be adjusted parallel with itself, according to the angular position it has reached and in such a way as to maintain the measurement or dimension Q defined between the reference - stop parts 7 and the zero point PZ constant at any angle value α.

In detail, the adjusting means 8 comprise cam means 9 positioned on the display means 7 and interacting with the fence 5. They also comprise the fence 5 which is divided into two separate parts, the first consisting of the part of the fence 5 in contact with the panel 2 and a connecting bar 10, one end of which is attached to the mobile table 3b, forming the pivot point X, by means of a connecting element 10a (for example a pin).

The connecting bar 10 is slidably connected to the fence 5 in such a way that it allows the fence 5 to move longitudinally in both directions (see arrows F2), according to the above-mentioned angular position adopted relative to the direction of feed A.

As is also illustrated in Figures 3 and 4, the cam means 9 comprise a first, curved groove 11 made in the semicircular plate 7a and in which a first, cam follower pin 12 can engage, the pin projecting from the bottom of the fence 5 and designed to allow the fence 5 to slide in a linear fashion, along the connecting bar 10 between at least two positions closest to the pivot point X, corresponding to fence 5 maximum inclination end positions, in both directions (examples are partially visible in Figures 1 and 2), relative to the direction of feed A.

The furthest pivot point X - fence 5 position may be, for example, with the fence 5 at a right angle to the direction of feed A.

Obviously, these positions are calculated during the creation of the first groove 11 and according to the adjustments calculated prior to the creation of the first groove 11.

To allow a check of the angle of inclination α, the first groove 11 has numeric references designed to display the angle α reached by the fence 5.

Inside the first groove 11 there is a second, guide pin 14 projecting from the fence 5, which may engage in corresponding seats 15 made in the bottom of the first groove 11 and forming reference angles which can be reached by the fence 5. This second pin 14 is coaxial with the first, cam follower pin 12 and is controlled by a push-button 14b by means of a relative connecting rod 14a.

This push-button 14b allows the stable connection between the second pin 14a and the seats 15 to be released during fence 5 movement.

To allow the fence 5 to be stabilised in the selected position, there are locking means 16 which operate on the fence 5 when it reaches a predetermined angular position α.

These locking means 16 comprise a plate 17 attached to the side of the fence 5 and having a third, reversible locking pin 18 which engages in a channel 19 in the mobile portion 3b.

This plate 17 has a sliding slot 17a, extending parallel with the fence 5, and in which the third pin 18 engages in such a way as to allow fence 5 angular movement irrespective of the position of the third pin 18, which can slide inside the channel 19.

As illustrated in Figure 3, the semicircular plate 7a has a second, curved groove 13.

Inside this second groove 13 a magnetic plate 20 is attached, which detects the angular position α reached and interacts with a magnetic sensor 20a, which slides inside the second groove 13.

The sensor 20a is attached to the plate 17 and connected to numeric display means 21 for the angular position reached by the fence 5. These means may consist of a second display 21 positioned on the side locking plate 17, so that the precise angular position reached can be checked.

Therefore, the device structured in this way completely fulfils the preset aims thanks to an extremely simple and effective structure which allows automatic adjustment, thanks to division of the fence into two parts and the cam profile - pin interaction, of the fence linear position according to the angle reached.

The system is precise, automatic and does not require calculations or further adaptation of the fence by the operator, who need only position the fence: this also significantly speeds up machine tooling operations, with drastically lower costs.

The invention described has evident industrial applications and may be subject to modifications and variations without thereby departing from the scope of the inventive concept. Moreover, all the details of the invention may be substituted by technically equivalent elements.

## Claims

1. An angular positioning device applicable on machines (1) for machining panels (2), the machines (1) comprising at least:
- a worktable (3) consisting of a fixed supporting portion (3a) and a portion or carriage (3b) which is mobile, in both directions, along a direction of feed (A), allowing the panel (2) to be cut to slide;
- a machining tool (4) attached to the fixed portion (3a) of the worktable (3), partially projecting from the table (3), having an axis substantially parallel with the worktable (3) and positioned parallel with the direction of feed (A);
- a reference and rule fence (5) for the panel (2), pivoting, at (X), on the mobile portion (3b) of the worktable (3) and whose angle can be adjusted relative to the direction of feed (A) to allow angled cuts on the panel (2); the fence (5) also having panel (2) reference and stop parts (6) designed to allow the display of a reference dimension (Q) on the fence (5); the fence (5) having a cutting zero point (PZ) belonging to the tool (4) cutting plane (4a);
- means (7) for displaying the angle (α) reached by the fence (5), said means being positioned on the mobile portion (3b) and at the fence (5), the device being **characterised in that** it comprises means (8) for adjusting the linear position of the fence (5) relative to the tool (4) cutting plane (4a), operating between the fence (5) and its pivot point (X) on the mobile portion (3b) and designed to allow adjustment of the fence (5) parallel with itself, according to the angular position reached, so as to maintain the measurement defined between the reference - stops parts (6) and the zero point (PZ) constant at any angle value (α).

2. The device according to claim 1, **characterised in that** the adjusting means (8) comprise cam means (9) positioned on the means (7) for displaying the angle (α) reached by the fence (5) and interacting with the fence (5).

3. The device according to claim 1, **characterised in that** the adjusting means (8) comprise cam means (9) positioned on the display means (7) and interacting with the fence (5), and a connecting bar (10), one end of which is attached to the mobile table (3b), by means of a connecting element (10a), forming the pivot point (X); the bar (10) being slidably connected to the fence (5) in such a way as to allow the fence (5) to move longitudinally in both directions according to the angular position adopted relative to the direction of feed (A).

4. The device according to claim 3, in which the display means (7) comprise a semicircular plate (7a), attached to a mobile portion (3b) of a worktable (3), and positioned below the fence (5), the device being **characterised in that** the cam means (9) comprise a first, curved groove (11) made in the semicircular plate (7a) and in which a first, cam follower pin (12) can engage, the latter projecting from the bottom of the fence (5) and designed to allow the fence (5) to slide in a linear fashion between at least two positions closest to the pivot point (X), corresponding to the fence (5) maximum angles of inclination, in both directions, relative to the direction of feed (A).

5. The device according to claim 4, **characterised in that** the first groove (11) has numeric references designed to display the angle (α) reached by the fence (5) and a second, guide pin (14) engages in it, the second pin projecting from the fence (5), connected to and coaxial with the first, cam follower pin (12), and designed to reversibly engage in seats (15) in the bottom of the first groove (11) which define reference angles that can be reached by the fence (5).

6. The device according to claim 5, **characterised in that** the fence (5) has locking means (16) operating on the fence (5) to allow its stable positioning when it reaches the predetermined angular position (α); the locking means (16) comprising a plate (17) attached to the side of the fence (5) and having a third, reversible locking pin (18) engaging in a channel (19) in a mobile portion (3b) of a worktable (3); the plate (17) having a sliding slot (19), extending parallel with the fence (5), and in which the third pin (18) engages in such a way as to allow fence (5) angular movement irrespective of the position of the third pin (18).

7. The device according to claim 4, **characterised in that** the plate (7a) has a second, curved groove (13); there being attached to one side of the second groove (13) a magnetic plate (20) which detects the angular position (α) reached and interacts with a magnetic sensor (20a), sliding inside the second groove (13), attached to a plate (17), and connected to numeric display means (21) for the angular position reached by the fence (5), said display means being positioned on the side locking plate (17).
